# EUROPÄISCHE PATENTSCHRIFT

(11) **EP 3 308 449 B1**
(45) Veröffentlichungstag und Bekanntmachung des Hinweises auf die Patenterteilung: **07.08.2019**
(21) Anmeldenummer: 16726603.0
(22) Anmeldetag: 03.06.2016
(51) Int. Cl.: H02K 1/20, H02K 9/22, H02K 7/18

(54) **STATORRING FÜR EINEN ELEKTRISCHEN GENERATOR, SOWIE GENERATOR UND WINDENERGIEANLAGE MIT SELBIGEM**
STATOR RING FOR AN ELECTRIC GENERATOR, AND GENERATOR AND WIND TURBINE HAVING SAID STATOR RING
ANNEAU DE STATOR POUR GÉNÉRATEUR ÉLECTRIQUE ET GÉNÉRATEUR ET ÉOLIENNE ÉQUIPÉ DE CELUI-CI

(30) Priorität: 11.06.2015 DE 102015210662
(43) Veröffentlichungstag der Anmeldung: 18.04.2018
(73) Patentinhaber: Wobben Properties GmbH, 26607 Aurich (DE)
(72) Erfinder: KNOOP, Frank, 26607 Aurich (DE); ZIEMS, Jan Carsten, 26607 Aurich (DE)
(74) Vertreter: Eisenführ Speiser
(86) Internationale Anmeldenummer: PCT/EP2016/062605
(87) Internationale Veröffentlichungsnummer: WO 2016/198324

(56) Entgegenhaltungen:
- DE-A1-102013 105 553
- FR-A- 513 509
- JP-A- S5 653 557

## Beschreibung

Die vorliegende Erfindung betrifft einen Statorring für einen elektrischen Generator, insbesondere einen Synchrongenerator bzw. einen Ringgenerator einer Windenergieanlage. Die Erfindung betrifft ferner einen solchen Synchrongenerator bzw. Ringgenerator. Weiterhin betrifft die Erfindung eine Windenergieanlage mit einem solchen Generator. Schließlich betrifft die Erfindung auch eine Verwendung einer Kühlkörperanordnung zum Abführen von Wärmeenergie aus einer Kühlausnehmung.

Statorringe der vorbezeichneten Art sind grundsätzlich bekannt. Sie weisen üblicherweise eine Vielzahl von Nuten zur Aufnahme der Statorwicklung auf, in welcher durch den an ihr entlang laufenden Rotor eine elektrische Leistung induziert wird. Die Statorringe sind typischerweise so aufgebaut, dass sie benachbart zu dem Abschnitt, der die Nuten trägt, ein magnetisches Joch aufweisen. Bei Statorringen für Innenläufer befindet sich das magnetische Joch radial außerhalb des Bereichs, in dem die Nuten vorgesehen sind. Bei Statorringen für Außenläufer verhält es sich entsprechend umgekehrt. Hier sind die Nuten radial außerhalb des magnetischen Jochs.

Infolge der Induktion elektrischer Leistung kommt es in einem elektrischen Generator der vorbezeichneten Art, und insbesondere im Statorring zu Wärmeentwicklung. Um die hierdurch bedingten Leistungsverluste möglichst gering zu halten, ist eine effiziente Wärmeabfuhr erstrebenswert.

Aus dem Stand der Technik sind verschiedene Ansätze bekannt, Wärme auch direkt aus dem Statorring abzuführen. Beispielsweise zeigt die Entgegenhaltung EP 2 419 991 B1 die Verwendung von Rohren, die sich durch den Statorring hindurch erstrecken und hydraulisch aufgeweitet werden, um fest in den Ausnehmungen anzuliegen, was für einen besseren Wärmeübergang sorgen soll. Ein ähnlicher Ansatz ist in DE102013105553 offenbart.

Während das Kühlen nach beispielsweise vorstehend bezeichneter Art in der Praxis allgemein als funktionsfähig eingestuft wird, so wird dennoch der erforderliche apparative Aufwand und auch der erforderliche Zeitaufwand zum Montieren der Rohre und zum Aufweiten der Rohre als nachteilig empfunden. Zudem sind die Rohre, wenn sie einmal aufgeweitet wurden, nur schwer aus dem Statorring wieder zu entfernen. Dies wird als nachteilig empfunden.

Vor diesem Hintergrund lag der Erfindung die Aufgabe zugrunde, einen Statorring der vorstehend bezeichneten Art anzugeben, bei dem die Nachteile aus dem Stand der Technik möglichst weitgehend überwunden werden. Insbesondere lag der Erfindung die Aufgabe zugrunde, einen Statorring anzugeben, der eine effiziente Kühlung des Statorrings bei vermindertem Montageaufwand ermöglicht. Weiter lag der Erfindung insbesondere die Aufgabe zugrunde, einen Statorring mit Kühlmöglichkeit anzugeben, bei dem die Kühlung auch nachträglich einfacher entfernt werden kann.

Die Erfindung löst die ihr zugrunde liegende Aufgabe bei einem Statorring der eingangs bezeichneten Art, indem der Statorring im Bereich des magnetischen Jochs mindestens eine Kühlausnehmung mit zwei einander gegenüberliegenden Kühlwänden aufweist, wobei in der Kühlausnehmung ein erster und ein zweiter Kühlkörper angeordnet sind, welche jeweils einander zugewandte, aneinander abgleitende Keilflächen sowie jeweils gegenüber der Keilfläche eine den Kühlwänden zugewandte Wärmekopplungsfläche zum Abführen von Wärmeenergie aus einer der Kühlwände aufweisen, und welche derart gegeneinander verschoben sind, dass die Wärmekopplungsflächen gegen die Kühlwände gepresst werden. Erfindungsgemäß sind die aneinander abgleitenden Keilflächen so ausgerichtet, dass beim Verschieben der Kühlkörper gegeneinander der Abstand zwischen den Wärmekopplungsflächen der Kühlkörper verändert wird.

Die Erfindung macht sich die Erkenntnis zu Nutze, dass es mit einer keilförmigen Kühlkörperausgestaltung leicht möglich ist, die Kühlkörper in die Kühlausnehmung einzusetzen, da diese noch nicht unmittelbar verspannt sein müssen. Ein nachträgliches Verspannen mittels Verschieben der Kühlkörper kann auf sehr einfache Weise von außen ohne signifikanten apparativen Aufwand erfolgen. Ebenso ist ein Zurücknehmen der Verspannung ebenfalls von außen mit unverändert geringem apparativem Aufwand möglich. Es lässt sich mit den keilförmig ausgebildeten, aneinander abgleitenden Kühlkörpern folglich auf sehr einfache Weise eine wärmeschlüssige Kopplung zwischen den Kühlkörpern und dem Statorring schaffen. Auch eine Nachrüstung eines erfindungsgemäßen Kühlsystems mit dem ersten und zweiten Kühlkörper lässt sich auf leichte Weise realisieren.

Die Erfindung wird vorteilhaft weitergebildet, indem einer oder beide Kühlkörper jeweils mindestens einen Fluidkanal zum Anschluss an ein Fluidkühlsystem aufweisen, insbesondere an einen Kühlwasserkreislauf.

In einer weiteren bevorzugten Ausgestaltung ist die Kontur der Wärmekopplungsfläche des ersten und zweiten Kühlkörpers jeweils an die Kontur der Kühlwand angepasst, denen die Wärmekopplungsflächen zugewandt sind. Zwar entsteht bei ausreichend starker Verpressung auch eine Anpassung der Oberflächenkontur aufgrund elastischer Verformung, allerdings wird es als vorteilhaft empfunden, die Flächen derart aneinander anzupassen, dass auch schon bei nur geringer Verpressung oder bei Abwesenheit einer Flächenpressung eine flächige Anlage zwischen den Wärmekopplungsflächen und den Kühlwänden erfolgen kann. Dies verbessert die Wärmekopplung.

Vorzugsweise sind die Wärmekopplungsflächen und/oder die Keilflächen jeweils mit einer Wärmeleitpaste versehen.

In einer weiteren bevorzugten Ausführungsform sind einer oder beide der Kühlkörper zumindest teilweise, vorzugsweise vollständig, aus einem der folgenden Werkstoffe ausgebildet: Aluminium, Aluminiumlegierung, Kuper, Kupferlegierung.

Die Erfindung geht in einem einfachsten Ausführungsbeispiel von der Konstruktionsweise aus, dass die ersten und zweiten Kühlkörper jeweils einteilig ausgebildet sind. Gemäß einer bevorzugten Ausführungsform ist aber alternativ vorgesehen, dass zumindest einer der Kühlkörper mehrteilig derart ausgebildet ist, dass ein erster Teilkörper die Keilfläche zur Interaktion mit dem jeweils anderen Kühlkörper aufweist, während ein zweiter Teilkörper mindestens einen Fluidkanal aufweist. Auf diese Weise lassen sich fertigungstechnische Vorteile erreichen.

Je nachdem, wie viel Platz der Statorring konstruktionsbedingt im Generator in radialer Richtung einnehmen soll, kann es entweder vorteilhaft sein, den ersten und zweiten Kühlkörper in radialer Richtung durch Verschieben zu verpressen oder in Umfangsrichtung durch Verschieben zu verpressen. Dementsprechend sind gemäß einer ersten alternativen bevorzugten Ausgestaltung die aneinander gegenüberliegenden Kühlwände der mindestens einen Kühlausnehmung in radialer Richtung voneinander beabstandet, während sie in einer zweiten bevorzugten alternativen Ausgestaltung in Umfangsrichtung voneinander beabstandet sind. Bei einer Beabstandung in radialer Richtung voneinander lässt sich ggf. eine höhere Anzahl von Kühlausnehmungen und Kühlkörpern über den Umfang des Storrings verteilen, während bei einer Beabstandung in Umfangsrichtung voneinander das magnetische Joch des Statorrings schmaler ausgeführt werden kann.

In einer besonders bevorzugten Ausführungsform weist der Statorring eine Vielzahl von Statorblechpaketen auf, wobei sich die Kühlausnehmungen durch die Statorblechpakete hindurcherstrecken, vorzugsweise von einer ersten axialen Stirnseite des Statorrings bis zu einer gegenüberliegenden zweiten axialen Stirnseite des Statorrings. Unter einem Statorblechpaket wird im Sinne der Erfindung eine Anordnung von mehreren übereinandergestapelten, vorzugsweise nach Art von Dynamoblechen ausgebildeten Statorblechen verstanden. Die Statorbleche können voneinander bspw. mittels Isolierpapier oder mittels einer Isolierlackierung getrennt sein.

In einer bevorzugten Ausführungsform der Erfindung weist die Kühlausnehmung einen rechteckförmigen Querschnitt auf, insbesondere in Erstreckungsrichtung der Ausnehmung, was vorzugsweise die axiale Richtung des Statorrings ist. Bei einer Kühlausnehmung mit rechteckförmigem Querschnitt können die Geometrien der Kühlkörper besonders einfach hergestellt werden. Die den Kühlwänden zugewandten Wärmekopplungsflächen sind dann ebenfalls eben auszuführen.

In einer weiteren bevorzugten Ausführungsform des Statorrings ist die Kühlausnehmung eine zu Montage- oder Befestigungszwecken in dem Statorring vorgesehene Ausnehmung, die ggf. nachträglich zur Anpassung an die Kühlkörper vergrößert worden ist.

Die Erfindung macht sich bzgl. dieses Aspektes insbesondere zu Nutze, dass anstelle des Erstellens dedizierter Kühlausnehmungen für die Kühlkörper bereits jene Öffnungen verwendet werden können, die im magnetischen Joch ohnehin zur Montage bzw. Befestigung der Statorbleche vorgesehen sind. Je nach erwünschter Kühlleistung kann es erforderlich sein, diese Montage- oder Befestigungsausnehmungen noch zu vergrößern oder an die Geometrie der ersten und zweiten Kühlkörper anzupassen, damit eine Montage und Demontage der Kühlkörper gelingen kann. Durch die zweite Verwendung dieser Ausnehmungen zur späteren Aufnahme der Kühlkörper wird aber eine besondere Synergie erreicht.

Die Erfindung betrifft in einem weiteren Aspekt wie eingangs bezeichnet einen elektrischen Generator, insbesondere Synchrongenerator, bzw. Ringgenerator einer Windenergieanlage mit einem Rotor und einem Stator, wobei der Stator einen Statorring aufweist.

Die Erfindung löst bei dem elektrischen Generator die ursprünglich angegebene Aufgabe, indem der Statorring nach einer der vorstehend beschriebenen bevorzugten Ausführungsformen ausgebildet ist. Bei dem Generator handelt es sich vorzugsweise um einen Generator mit einem Durchmesser von mehr als einem Meter, insbesondere mehreren Metern. Insbesondere handelt es sich bei dem Generator um einen Generator der Leistungsklasse > 1 MW. Ferner ist der Generator insbesondere ein langsam drehender Generator mit Umdrehungsgeschwindigkeiten von weniger als 40 Umdrehungen/Minute, insbesondere weniger als 30, bei besonders großen Ausführungen sogar weniger als 20 Umdrehungen/Minute. Das Gewicht eines solchen erfindungsgemäßen Generators liegt bei mehr als einer Tonne, insbesondere bei mehreren Tonnen.

Das Bedürfnis einer effizienten Wärmeabführung, auch mittels Flüssigkeitskühlung, erklärt sich aus den vorstehend genannten Größenordnungen des Generators.

In einem dritten Aspekt betrifft die Erfindung wie eingangs erwähnt eine Windenergieanlage, insbesondere eine getriebelose Windenergieanlage, mit einem elektrischen Generator, der insbesondere ein Synchrongenerator bzw. Ringgenerator ist. Die Erfindung löst die ihr zugrunde liegende Aufgabe bei einer solchen Windenergieanlage, indem der Generator nach einer der vorstehend beschriebenen bevorzugten Ausführungsformen ausgebildet ist, und insbesondere einen Statorring nach einer der hierin beschriebenen bevorzugten Ausführungsformen aufweist.

Gemäß einem vierten Aspekt betrifft die Erfindung die Verwendung einer Kühlkörperanordnung zum Abführen von Wärmeenergie aus einer Kühlausnehmung in dem Statorring eines elektrischen Generators einer Windenergieanlage. Die Erfindung löst die ihr zugrunde liegende Aufgabe bei einer solchen Verwendung, indem die Kühlausnehmung zwei aneinander gegenüberliegende Kühlwände aufweist, und wobei die Kühlkörperanordnung einen ersten und zweiten Kühlkörper aufweist, welche jeweils eine den Kühlwänden zugewandte Wärmekopplungsfläche aufweisen und derart gegeneinander verschoben sind, dass die Wärmekopplungsflächen gegen die Kühlwände gepresst werden. Die erfindungsgemäße verwendete Kühlkörperanordnung ist vorzugsweise nach einer der vorstehend beschriebenen Ausführungsformen ausgebildet.

Die Erfindung wird nachstehend unter Bezugnahme auf die beigefügten Figuren anhand eines bevorzugten Ausführungsbeispiels näher erläutert. Hierbei zeigen:
- Figur 1: eine Windenergieanlage schematisch in einer perspektivischen Ansicht,
- Figur 2: eine Gondel der Windenergieanlage gemäß Figur 1 schematisch in einer perspektivischen Schnittansicht
- Figur 3: eine vereinfachte schematische perspektivische Ansicht eines Stators der Windenergieanlage gemäß den Figuren 1 und 2,
- Figur 4: eine partielle schematische Schnittansicht durch den Stator gemäß Figur 3,
- Figur 5: eine schematische Querschnittsansicht quer zu der Ansicht gemäß Figur 4, und
- Figuren 6a-e: verschiedene Projektionsansichten einer Kühlkörperanordnung für den Generator gemäß den vorstehenden Figuren.

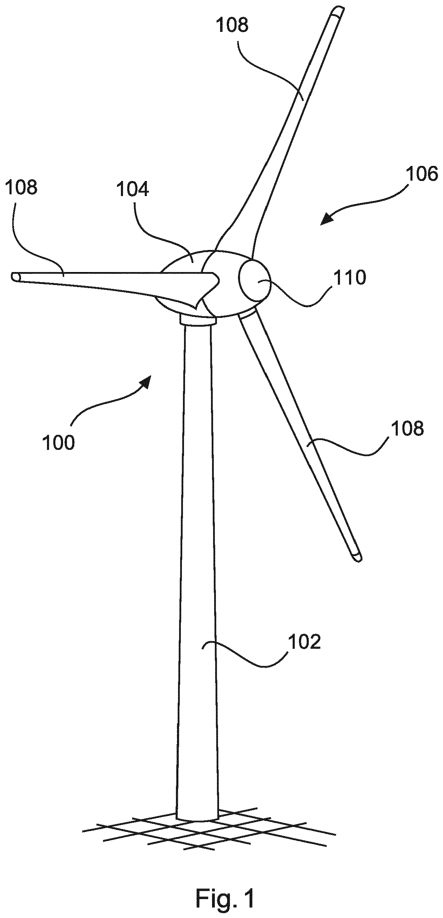

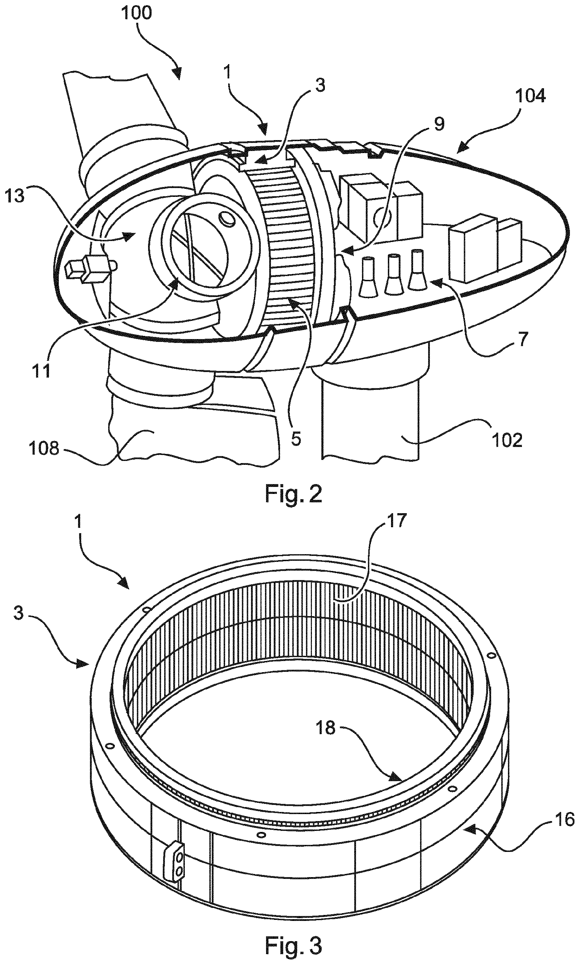

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird in Betrieb durch den Wind in eine Drehbewegung versetzt und treibt dadurch einen Generator 1 (Figur 2) in der Gondel 104 an.

Die Gondel 104 ist in Figur 2 gezeigt. Die Gondel 104 ist drehbar an dem Turm 102 montiert und mittels eines Azimutantriebs 7 in allgemein bekannter Weise angetrieben verbunden. In ferner allgemein bekannter Weise ist in der Gondel 104 ein Maschinenträger 9 angeordnet, der einen Synchrongenerator 1 hält. Der Synchrongenerator 1 ist gemäß der vorliegenden Erfindung ausgebildet und ist insbesondere ein langsam drehender, vielpoliger Synchron-Ringgenerator. Der Synchrongenerator 1 weist einen Stator 3 und einen innen laufenden Rotor 5 auf, auch bezeichnet als Läufer. Der Rotor beziehungsweise Läufer 5 ist mit einer Rotornabe 13 verbunden, die die durch den Wind verursachte Rotationsbewegung der Rotorblätter 108 an den Synchrongenerator 1 überträgt.

Figur 3 zeigt den Stator 3 in Alleinstellung. Der Stator 3 weist einen Statorring 16 mit einer inneren Umlauffläche 18 auf. In der inneren Umlauffläche 18 ist eine Vielzahl von Nuten 17 vorgesehen, die zur Aufnahme der Statorwicklung in Form von Leiterbündeln ausgebildet sind.

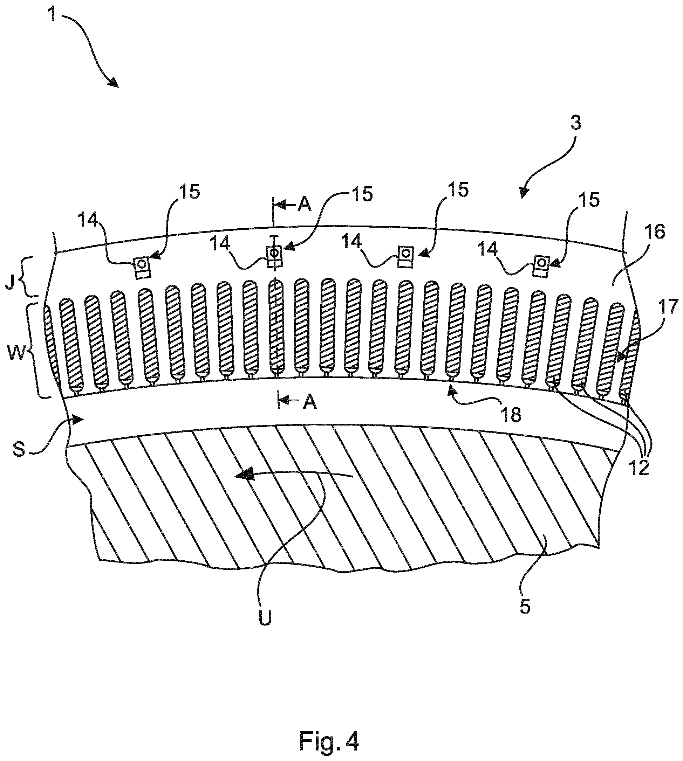

Wie sich aus der Querschnittsansicht gemäß Figur 4 ergibt, weist der Statorring 16 des Stators 3 in einem ersten radialen Bereich W Statorwicklung. Die Statorwicklung ist in Form von Leiterbündeln 12 in den Nuten 17 untergebracht, die sich von der inneren Umlauffläche 18 aus erstrecken. Benachbart zu dem Bereich W ist das magnetische Joch J ausgebildet. Bei dem dargestellten Generator 1 mit Innenläufer, angedeutet durch einen Rotor 5, der sich in Umlaufrichtung U innerhalb des Statorrings 16 bewegt, ist das magnetische Joch J radial außerhalb des Bereichs W mit der Statorwicklung. Bei einem alternativen, ebenfalls erfindungsgemäßen Generator mit Außenläufer (nicht dargestellt) würde der Rotor radial außerhalb des Stators umlaufen, und das magnetische Joch wäre demzufolge radial innerhalb des Bereichs der Statorwicklungen benachbart zu diesem angeordnet. Auf eine zusätzliche zeichnerische Darstellung wird an dieser Stelle zugunsten der Übersichtlichkeit verzichtet.

Zwischen dem Stator 3 und dem Rotor 5 ist ein Luftspalt S ausgebildet.

Im Bereich J des magnetischen Jochs sind mehrere Kühlausnehmungen 15 im Statorring 16 ausgebildet. In den Kühlausnehmungen 15 ist jeweils eine Kühlkörperanordnung 14 angeordnet und zur Wärmeabfuhr aus dem Statorring 16 eingerichtet.

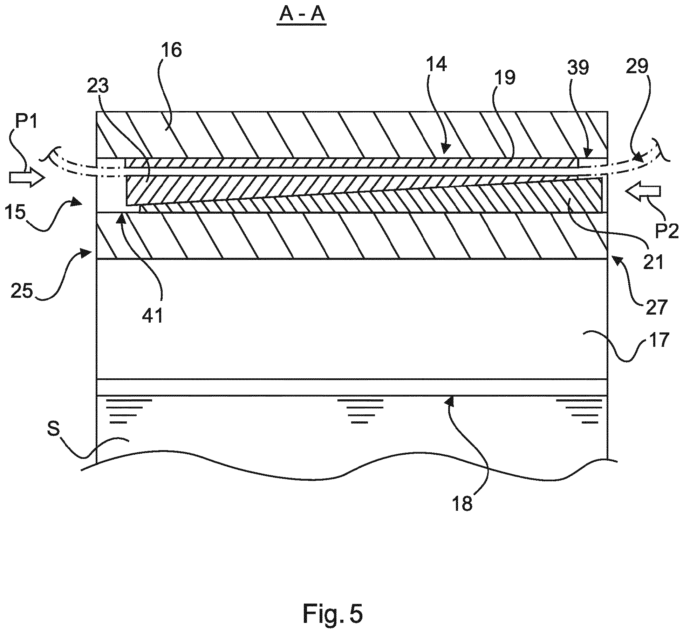

Figur 5 zeigt weitere Details zur Kühlkörperanordnung 14.

Die entlang der Schnittlinie A-A verlaufende Querschnittsansicht der Figur 5 zeigt die Einbaulage der Kühlkörperanordnung 14. Die Kühlkörperanordnung 14 weist einen ersten Kühlkörper 19 und einen zweiten Kühlkörper 21 auf. Ein Kühlkanal 23 erstreckt sich durch den ersten Kühlkörper 19 in axialer Richtung (bezogen auf die Rotationsachse des Statorrings). Der Kühlkanal 23 ist verzugsweise an einen Kühlkreislauf 29 angeschlossen. Die Kühlausnehmung 15 erstreckt sich von einer ersten axialen Stirnseite 25 des Statorrings 16 bis zu einer gegenüberliegenden zweiten axialen Stirnseite 27 des Statorrings 16.

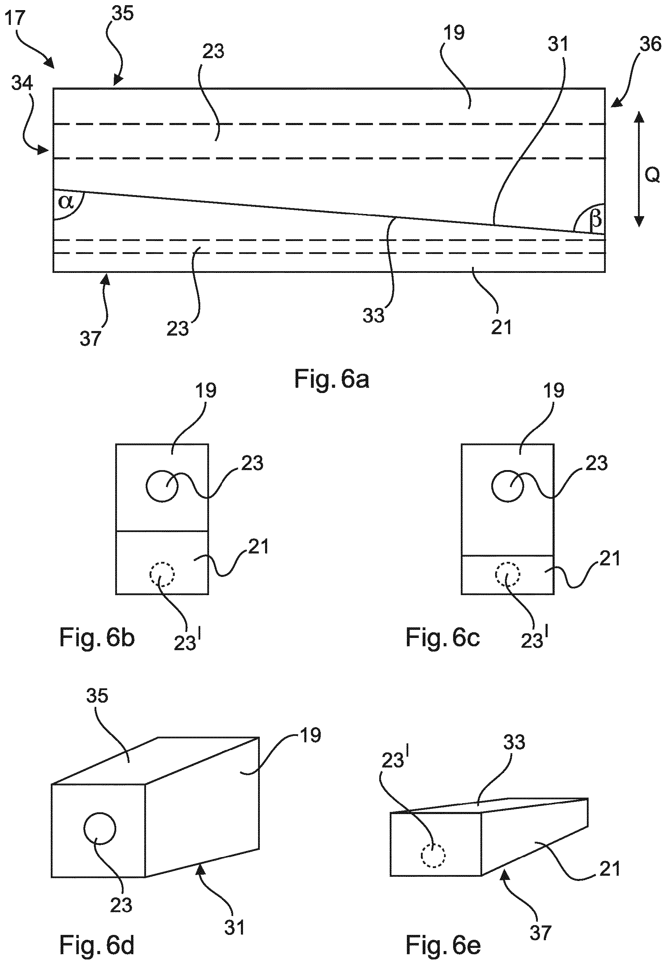

Die ersten und zweiten Kühlkörper 19, 21 weisen aneinander abgleitende Keilflächen 31, 33 auf (Figur 6a-e), die derart ausgebildet sind, dass bei einer Verschiebung des ersten Kühlkörpers 19 und des zweiten Kühlkörpers 21 relativ zueinander in Richtung der Pfeile P₁ und/oder P₂ die Kühlkörper 19, 21 gegen ihnen jeweils zugewandte Kühlwände 39, 41 der Kühlausnehmung 15 gepresst werden. Hierdurch wird ein besserer Wärmeübergang zwischen der Kühlkörperanordnung 14 und dem Statorring 16 erzielt. Weitere Details zum ersten und zweiten Kühlkörper 19, 21 sind auch den Figuren 6a-e zu entnehmen.

Wie in Figur 6a dargestellt ist, sind der erste und zweite Kühlkörper 19, 21 derart zueinander angeordnet, dass eine Keilfläche 31 des ersten Kühlkörpers 19 sich in flächiger Anlage mit einer Keilfläche 33 des zweiten Kühlkörpers 21 befindet. Beide Keilflächen 31, 33 weisen jeweils zu den vorzugsweise im Wesentlichen radial ausgerichteten Stirnseiten 34, 36 der Kühlkörperanordnung 14 einen Winkel α, β auf, der jeweils ungleich 90° ist. Besonders bevorzugt sind der Winkel α, β zueinander identisch. Die winklige Ausrichtung der Keilflächen 31, 33 bewirkt, dass bei einem Verschieben des ersten und zweiten Keilkörpers 19, 21 gemäß der Pfeile P₁ und P₂ aus Figur 5. Der Abstand zwischen einer Wärmekopplungsfläche 35 des ersten Kühlkörpers 19 und einer Wärmekopplungsfläche 37 des zweiten Kühlkörpers 21 in Richtung des Pfeils Q verändert wird. Hierdurch ist es auf technisch sehr einfache Weise möglich, die Kühlkörperanordnung fest in die Kühlausnehmung 15 zu pressen und einen guten Wärmeübergang zwischen den Kühlwänden 39, 41 einerseits und den Wärmekopplungsflächen 35, 37 andererseits zu gewährleisten.

In den Figuren 6a-e ist gemäß einer weiteren bevorzugten Ausgestaltung optional ein zweiter Kühlkanal 23' im zweiten Kühlkörper 21 vorgesehen. Alternativ oder zusätzlich können auch in einem oder beiden Kühlkörpern 19, 21 mehrere Kühlkanäle vorgesehen sein.

Hinsichtlich der Kühlleitungen selbst sind vielfältige geometrische Anordnungen möglich, da man gemäß der Erfindung nicht länger auf die strenge zylindrische bzw. hohlzylindrische Geometrie von Rohren angewiesen ist, sondern beispielsweise im Strangpressverfahren beliebe Kühlleitungsgeometrien realisieren kann, etwa vorzugsweise mäanderförmige Kühlkanäle. Alternativ zu dem gezeigten rechteckigen Keilprofil, welches an die rechteckige Geometrie der Kühlausnehmung gemäß den vorstehenden Figuren angepasst ist, sind auch abweichende Geometrien insbesondere der Wärmekopplungsflächen 35, 37 denkbar, die jeweils vorzugsweise an die Kontur der Kühlausnehmung und deren Kühlwände angepasst sind.

## Patentansprüche

1. Statorring (16) für einen elektrischen Generator (1), insbesondere einen Synchrongenerator bzw. Ringgenerator einer Windenergieanlage (100), mit
- einer Vielzahl von Nuten (17) zur Aufnahme der Statorwicklung (W), und
einem magnetischen Joch (J), wobei
der Statorring im Bereich des magnetischen Jochs mindestens eine Kühlausnehmung (15) mit zwei einander gegenüberliegenden Kühlwänden (39, 41), sowie
einen ersten und einen zweiten Kühlkörper (19, 21) aufweist, die in der Kühlausnehmung angeordnet sind, welche jeweils einander zugewandte, aneinander abgleitende Keilflächen (31, 33) sowie
jeweils gegenüber der Keilfläche eine den Kühlwänden zugewandte Wärmekopplungsfläche (35, 37) zum Abführen von Wärmeenergie aus einer der Kühlwände aufweisen und derart gegeneinander verschoben sind, dass die Wärmekopplungsflächen gegen die Kühlwände gepresst werden.

2. Statorring (16) nach Anspruch 1,
wobei einer oder beide Kühlkörper (19, 21) jeweils mindestens einen Fluidkanal (23, 23') zum Anschluss an ein Fluidkühlsystem aufweisen.

3. Statorring (16) nach Anspruch 1 oder 2,
wobei die Kontur der Wärmekopplungsfläche (35, 37) des ersten und zweiten Kühlkörpers (19, 21) an die Kontur der Kühlwand (39, 41) angepasst ist.

4. Statorring (16) nach einem der vorstehenden Ansprüche,
wobei die Wärmekopplungsflächen (35, 37) und/oder die Keilflächen (31, 33) jeweils mit einer Wärmeleitpaste versehen sind.

5. Statorring (16) nach einem der vorstehenden Ansprüche,
wobei einer oder beide der Kühlkörper (19, 21) zumindest teilweise, vorzugsweise vollständig, aus einem der Werkstoffe ausgebildet sind: Aluminium, Aluminiumlegierung, Kupfer, Kupferlegierung.

6. Statorring (16) nach einem der Ansprüche 2 bis 5,
wobei zumindest einer der Kühlkörper (19, 21) mehrteilig derart ausgebildet ist, dass ein erster Teilkörper die Keilfläche (31, 32) aufweist, und ein zweiter Teilkörper den mindestens einen Fluidkanal (23, 23') aufweist.

7. Statorring (16) nach Anspruch 6,
wobei die einander gegenüberliegenden Kühlwände (39, 41) der mindestens einen Kühlausnehmung (15) in radialer Richtung voneinander beabstandet sind.

8. Statorring (16) nach Anspruch 6,
wobei die einander gegenüberliegenden Kühlwände (39, 41) der mindestens einen Kühlausnehmung (15) in Umfangsrichtung voneinander beabstandet sind.

9. Statorring (16) nach einem der Ansprüche 6 bis 8,
wobei der Statorring (16) eine Vielzahl von Statorblechpaketen aufweist, wobei sich die Kühlausnehmungen (15) durch die Statorblechpakete hindurch erstrecken, vorzugsweise von einer ersten axialen Stirnseite des Statorrings bis zu einer gegenüberliegenden zweiten axialen Stirnseite des Statorrings.

10. Statorring (16) nach einem der vorstehenden Ansprüche,
wobei die mindestens eine Kühlausnehmung (15) einen rechteckigförmigen Querschnitt aufweist.

11. Statorring (16) nach einem der vorstehenden Ansprüche,
wobei die mindestens eine Kühlausnehmung (15) eine zu Montagezwecken dem Statorring vorgesehene Ausnehmung ist, die gegebenenfalls nachträglich zur Anpassung an die Kühlkörper (19, 21) vergrößert worden ist.

12. Elektrischer Generator (1), insbesondere Synchrongenerator bzw. Ringgenerator einer Windenergieanlage, mit einem Rotor (5) und einem Stator (3), wobei der Stator einen Statorring (16) aufweist,
**dadurch gekennzeichnet, dass** der Statorring (16) nach einem der vorstehenden Ansprüche ausgebildet ist.

13. Windenergieanlage (100), insbesondere getriebelose Windenergieanlage, mit einem elektrischen Generator (1), insbesondere einem Synchrongenerator bzw. Ringgenerator,
**dadurch gekennzeichnet, dass** der Generator (1) nach Anspruch 12 ausgebildet ist.

14. Verwendung einer Kühlkörperanordnung (14) zum Abführen von Wärmeenergie aus einer Kühlausnehmung (15) in dem Statorring (16) eines elektrischen Generators (1) einer Windenergieanlage (100), wobei die Kühlausnehmung (15) zwei einander gegenüberliegende Kühlwände (39, 41) aufweist, und wobei
die Kühlkörperanordnung einen ersten und einen zweiten Kühlkörper (19, 21) aufweist die in der Kühlausnehmung angeordnet sind, welche jeweils einander zugewandte, aneinander abgleitende Keilflächen (31, 33) sowie jeweils gegenüber der Keilfläche (31, 33) eine den Kühlwänden zugewandte Wärmekopplungsfläche (35, 37) aufweisen und derart gegeneinander verschoben sind, dass die Wärmekopplungsflächen gegen die Kühlwände gepresst werden.

## Claims

1. A stator ring (16) for an electric generator (1), in particular a synchronous generator or ring generator of a wind power installation (100), comprising
- a plurality of grooves (17) for receiving the stator winding (W), and
- a magnetic yoke (J), wherein
in the region of the magnetic yoke the stator ring has at least one cooling recess (15) having two mutually opposite cooling walls (39, 41), and
a first and a second heat sink (19, 21) arranged in the cooling recess which have respective mutually facing wedge surfaces (31, 33) which slide against each other and
respectively opposite the wedge surface a thermal coupling surface (35, 37) which faces towards the cooling walls for dissipating heat energy from one of the cooling walls and are displaced relative to each other in such a way that the thermal coupling surfaces are pressed against the cooling walls.

2. A stator ring (16) according to claim 1
wherein one or both heat sinks (19, 21) respectively have at least one fluid passage (23, 23') for connection to a fluid cooling system.

3. A stator ring (16) according to claim 1 or claim 2
wherein the contour of the thermal coupling surfaces (35, 37) of the first and second heat sinks (19, 21) is adapted to the contour of the cooling wall (39, 41).

4. A stator ring (16) according to one of the preceding claims
wherein the thermal coupling surfaces (35, 37) and/or the wedge surfaces (31, 33) are respectively provided with a heat-conducting paste.

5. A stator ring (16) according to one of the preceding claims
wherein one or both of the heat sinks (19, 21) are at least partially and preferably completely formed from one of the materials: aluminium, aluminium alloy, copper and copper alloy.

6. A stator ring (16) according to one of claims 2 to 5
wherein at least one of the heat sinks (19, 21) is of a multi-part configuration such that a first portion has the wedge surface (31, 32) and a second portion has the at least one fluid passage (23, 23').

7. A stator ring (16) according to claim 6
wherein the mutually opposite cooling walls (39, 41) of the at least one cooling recess (15) are spaced from each other in the radial direction.

8. A stator ring (16) according to claim 6
wherein the mutually opposite cooling walls (39, 41) of the at least one cooling recess (15) are spaced from each other in the peripheral direction.

9. A stator ring (16) according to one of claims 6 to 8
wherein the stator ring (16) has a plurality of stator lamination sets, wherein the cooling recesses (15) extend through the stator lamination sets, preferably from a first axial end of the stator ring to an opposite second axial end of the stator ring.

10. A stator ring (16) according to one of the preceding claims
wherein the at least one cooling recess (15) is of a rectangular cross-section.

11. A stator ring (16) according to one of the preceding claims
wherein the at least one cooling recess (15) has a recess which is provided for mounting purposes of the stator ring and which has possibly been subsequently enlarged for adaptation to the heat sinks (19, 21).

12. An electric generator (1), in particular a synchronous generator or ring generator of a wind power installation, comprising a rotor (5) and a stator (3), wherein the stator has a stator ring (16),
**characterised in that** the stator ring (16) is in accordance with one of the preceding claims.

13. A wind power installation (100), in particular a gearless wind power installation, comprising an electric generator (1), in particular a synchronous generator or a ring generator, **characterised in that** the generator (1) is in accordance with claim 12.

14. Use of a heat sink arrangement (14) for the dissipation of heat energy from a cooling recess (15) in the stator ring (16) of an electric generator (1) of a wind power installation (100), wherein the cooling recess (15) has two mutually opposite cooling walls (39, 41) and wherein
the heat sink arrangement has a first and a second heat sink (19, 21) arranged in the cooling recess which have respective mutually facing wedge surfaces (31, 33) which slide against each other and respectively opposite the wedge surface (31, 33) a thermal coupling surface (35, 37) facing towards the cooling walls and are displaced relative to each other in such a way that the thermal coupling surfaces are pressed against the cooling walls.

## Revendications

1. Anneau de stator (16) pour un générateur électrique (1), en particulier un générateur synchrone ou générateur annulaire d'une éolienne (100), avec
- une pluralité de rainures (17) pour la réception de l'enroulement de stator (W), et
une culasse magnétique (J), dans lequel
l'anneau de stator présente dans la zone de la culasse magnétique au moins un évidement de refroidissement (15) avec deux parois de refroidissement (39, 41) se faisant face, ainsi que
un premier et un deuxième corps de refroidissement (19, 21), qui sont agencés dans l'évidement de refroidissement, lesquels présentent des surfaces de calage (31, 33) respectivement tournées l'une vers l'autre, glissant l'une sur l'autre ainsi que
respectivement en face de la surface de calage, une surface de couplage thermique (35, 37) tournée vers les parois de refroidissement pour l'évacuation d'énergie thermique d'une des parois de refroidissement et sont décalées l'une par rapport à l'autre de sorte que les surfaces de couplage thermique sont pressées contre les parois de refroidissement.

2. Anneau de stator (16) selon la revendication 1,
dans lequel un ou les deux corps de refroidissement (19, 21) présentent respectivement au moins un canal de fluide (23, 23') pour le raccordement à un système de refroidissement de fluide.

3. Anneau de stator (16) selon la revendication 1 ou 2,
dans lequel le contour de la surface de couplage thermique (35, 37) du premier et deuxième corps de refroidissement (19, 21) est adapté au contour de la paroi de refroidissement (39, 41).

4. Anneau de stator (16) selon l'une quelconque des revendications précédentes,
dans lequel les surfaces de couplage thermique (35, 37) et/ou les surfaces de calage (31, 33) sont respectivement dotées d'une pâte thermique.

5. Anneau de stator (16) selon l'une quelconque des revendications précédentes,
dans lequel un ou les deux corps de refroidissement (19, 21) sont réalisés au moins en partie, de préférence entièrement, en un des matériaux : aluminium, alliage d'aluminium, cuivre, alliage de cuivre.

6. Anneau de stator (16) selon l'une quelconque des revendications 2 à 5,
dans lequel au moins un des corps de refroidissement (19, 21) est réalisé en plusieurs parties de sorte qu'un premier corps partiel présente la surface de calage (31, 32), et un deuxième corps partiel présente l'au moins un canal de fluide (23, 23').

7. Anneau de stator (16) selon la revendication 6,
dans lequel les parois de refroidissement (39, 41) se faisant face de l'au moins un évidement de refroidissement (15) sont espacées l'une de l'autre dans une direction radiale.

8. Anneau de stator (16) selon la revendication 6,
dans lequel les parois de refroidissement (39, 41) se faisant face de l'au moins un évidement de refroidissement (15) sont espacées l'une de l'autre dans une direction périphérique.

9. Anneau de stator (16) selon l'une quelconque des revendications 6 à 8,
dans lequel l'anneau de stator (16) présente une pluralité d'empilages de tôles statoriques, dans lequel les évidements de refroidissement (15) s'étendent à travers les empilages de tôles statoriques, de préférence d'un premier côté frontal axial de l'anneau de stator jusqu'à un deuxième côté frontal axial opposé de l'anneau de stator.

10. Anneau de stator (16) selon l'une quelconque des revendications précédentes,
dans lequel l'au moins un évidement de refroidissement (15) présente une section transversale rectangulaire.

11. Anneau de stator (16) selon l'une quelconque des revendications précédentes,
dans lequel l'au moins un évidement de refroidissement (15) est un évidement prévu à des fins de montage de l'anneau de stator, qui a été agrandi le cas échéant ultérieurement pour l'adaptation aux corps de refroidissement (19, 21).

12. Générateur électrique (1), en particulier générateur synchrone ou générateur annulaire d'une éolienne, avec un rotor (5) et un stator (3), dans lequel le stator présente un anneau de stator (16),
**caractérisé en ce que** l'anneau de stator (16) est réalisé selon l'une quelconque des revendications précédentes.

13. Éolienne (100), en particulier éolienne sans engrenage, avec un générateur électrique (1), en particulier un générateur synchrone ou générateur annulaire,
**caractérisée en ce que** le générateur (1) est réalisé selon la revendication 12.

14. Utilisation d'un agencement de corps de refroidissement (14) pour l'évacuation d'énergie thermique d'un évidement de refroidissement (15) dans l'anneau de stator (16) d'un générateur électrique (1) d'une éolienne (100), dans laquelle l'évidement de refroidissement (15) présente deux parois de refroidissement (39, 41) se faisant face, et dans laquelle
l'agencement de corps de refroidissement présente un premier et un deuxième corps de refroidissement (19, 21), qui sont agencés dans l'évidement de refroidissement,
lesquels présentent des surfaces de calage (31, 33) respectivement tournées l'une vers l'autre, glissant l'une sur l'autre ainsi que respectivement en face de la surface de calage (31, 33), une surface de couplage thermique (35, 37) tournée vers les parois de refroidissement et sont décalées l'une par rapport à l'autre de sorte que les surfaces de couplage thermique sont pressées contre les parois de refroidissement.
